# EUROPEAN PATENT APPLICATION

(11) **EP 4 354 583 A1**
(43) Date of publication of application: **17.04.2024**
(21) Application number: 22820009.3
(22) Date of filing: 17.05.2022
(51) Int. Cl.: H01M 10/42, H01M 10/18, H01M 10/48, H01M 10/54, H02J 7/00

(54) **LEAD STORAGE BATTERY MANAGEMENT SYSTEM, AND LEAD STORAGE BATTERY MANAGEMENT PROGRAM**

(30) Priority: 07.06.2021 JP 2021095157
(71) Applicant: FURUKAWA ELECTRIC CO., LTD., Tokyo 100-8322 (JP); The Furukawa Battery Co., Ltd., Yokohama-shi, Kanagawa-ken 240-0006 (JP)
(72) Inventor: IWANE Noriyasu, Tokyo 100-8322 (JP); YAMAMOTO Kanichiro, Tokyo 100-8322 (JP); AOGAKI Tomoyuki, Tokyo 100-8322 (JP); ARAGAKI Masanobu, Tokyo 100-8322 (JP); NAKAMURA Hideto, Tokyo 100-8322 (JP); NAKAO Kengo, Tokyo 100-8322 (JP)
(74) Representative: Grünecker Patent- und Rechtsanwälte PartG mbB
(86) International application number: PCT/JP2022/020512
(87) International publication number: WO 2022/259826

(57) **Abstract**

There are provided a lead-acid battery management system and a lead-acid battery management program which appropriately manage a bipolar lead-acid battery to reduce a degree to which the lead-acid battery imposes a load on environment as much as possible and are necessary to cause a circulation cycle from manufacturing to reuse to reliably function. A lead-acid battery system (BS) including a bipolar lead-acid battery (B) and a management and support apparatus (4) configured to manage the lead-acid battery system (BS) are provided. The management and support apparatus (4) includes a recording unit (42) configured to record operation history information of the bipolar lead-acid battery (B) and a state determination unit (43) configured to determine necessity of replacement of the bipolar lead-acid battery (B).

## Description

### Technical Field

Embodiments of the present invention relate to a lead-acid battery management system and a lead-acid battery management program.

### Background Art

Conventionally, for example, various storage batteries such as a lead-acid battery and a lithium ion secondary battery have been used. Further, methods for reusing these storage batteries have also been proposed. For example, PTL 1 illustrated below discloses an invention related to a regeneration process of a lead-acid battery waste and the like.

That is, PTL 1 discloses a method for recovering lead contained in a mixture of lead and lead compounds with high efficiency and recovering lead from an old lead-acid battery in which a sulfuric acid-containing substance can be used again as an acid for a storage battery.

### Citation List

### Patent Literature

PTL 1: JP S60-172180 A
PTL 2: JP 6647111 B2
PTL 3: JP 6831807 B2

### Summary of Invention

### Technical Problem

Here, the number of power generation facilities utilizing renewable energy such as sunlight and wind power has increased in recent years. In such a power generation facility, the amount of power generated cannot be controlled, and thus a storage battery is used to level the power load. That is, when the amount of power generation is larger than a consumption, a difference is charged into the storage battery, and when the amount of power generation is smaller than a consumption, a difference is discharged from the storage battery.

These storage batteries for power storage are installed in a house and an office, or sites of a factory, an electric power business operator, and the like. Alternatively, the storage batteries for power storage may be installed near a place where power is generated using renewable energy, for example, in an isolated place. In particular, in a case of being installed in an isolated place, its scale may be large, and a large number of storage batteries are installed.

In a case of such a storage battery for power storage, use in units of several years to ten years from a start of operation is assumed. When such long-term use is assumed, it is necessary to appropriately cope with a case where a failure such as malfunction occurs after the start of operation and to perform periodic repair and management (maintenance), and it is also necessary to consider handling of the storage battery in a case where the operation is finished.

Further, in a case where a lead-acid battery is used as such a storage battery, the lead-acid battery cannot be left and discarded even after the operation is finished, and needs to be recovered since lead corresponds to a harmful substance. In particular, since the number of storage batteries used for power storage is enormous as described above, it is necessary to establish a circulation cycle of reliable recovery and reuse.

An object of the present invention is to provide a lead-acid battery management system and a lead-acid battery management program which appropriately manage a bipolar lead-acid battery to reduce a degree to which the lead-acid battery imposes a load on environment as much as possible and are necessary to cause a circulation cycle from manufacturing to reuse to reliably function.

### Solution to Problem

A lead-acid battery management system according to an aspect of the present invention includes a lead-acid battery system including a bipolar lead-acid battery, and a management and support apparatus configured to manage the lead-acid battery system, the management and support apparatus including a recording unit configured to record operation history information of the bipolar lead-acid battery, and a state determination unit configured to determine necessity of replacement of the bipolar lead-acid battery.

A bipolar lead-acid battery management program according to an aspect of the present invention causes a lead-acid battery management system to execute processing including: collecting operation history information of a bipolar lead-acid battery; calculating determination information for determining service life and time for replacement of the bipolar lead-acid battery using the collected operation history information; and determining necessity of replacement of the bipolar lead-acid battery based on the determination information.

### Advantageous Effects of Invention

In this manner, the lead-acid battery management system according to the aspect of the present invention includes the lead-acid battery system including the bipolar lead-acid battery, and the management and support apparatus configured to manage the lead-acid battery system, and the management and support apparatus includes the recording unit configured to record the operation history information of the bipolar lead-acid battery, and the state determination unit configured to determine the necessity of the replacement of the bipolar lead-acid battery. Therefore, the degree to which the lead-acid battery imposes the load on the environment can be reduced as much as possible by appropriately managing the bipolar lead-acid battery, and the circulation cycle from manufacturing to reuse can be caused to reliably function.

### Brief Description of Drawings

FIG. 1 is a block diagram illustrating an overall configuration of a lead management system according to an embodiment of the present invention;
FIG. 2 is a block diagram illustrating an internal configuration of a management and support apparatus according to the embodiment of the present invention;
FIG. 3 is a block diagram illustrating a detailed internal configuration of a state determination unit according to the embodiment of the present invention;
FIG. 4 is a sequence diagram illustrating a flow for achieving a circulation cycle of a bipolar lead-acid battery according to the embodiment of the present invention;
FIG. 5 is a sequence diagram illustrating a flow for achieving the circulation cycle of the bipolar lead-acid battery according to the embodiment of the present invention; and
FIG. 6 is a sequence diagram illustrating a flow for achieving the circulation cycle of the bipolar lead-acid battery according to the embodiment of the present invention.

### Description of Embodiments

Hereinafter, an embodiment of the present invention will be described in detail with reference to the drawings. Note that the embodiment described below illustrates an example of the present invention. In addition, various changes or improvements can be added to the present embodiment, and a mode to which such changes or improvements are added can also be included in the present invention. This embodiment and modifications thereof are included in the scope and gist of the invention, and are included in the scope of the invention described in the claims and its equivalents.

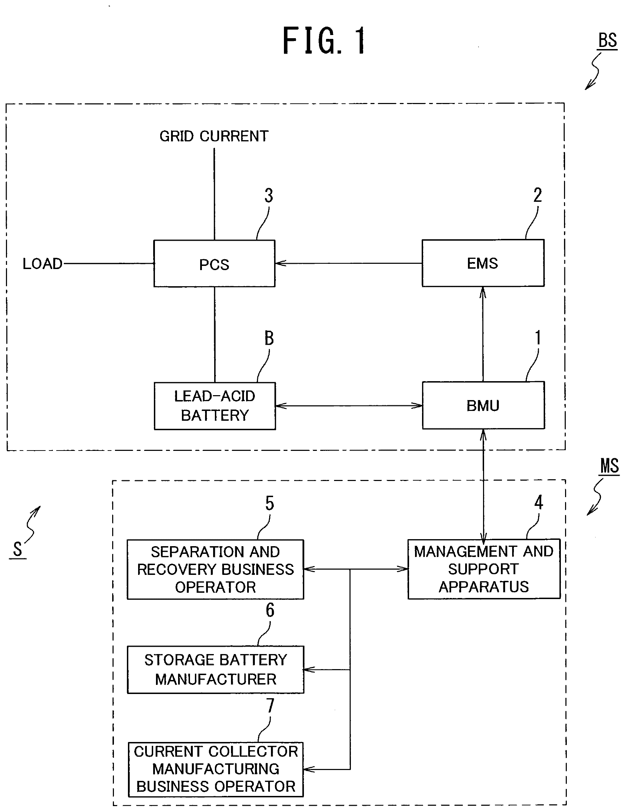

An overall configuration of a lead-acid battery management system S according to the embodiment of the present invention will be described with reference to FIG. 1. FIG. 1 is a block diagram illustrating the overall configuration of the lead-acid battery management system S according to the embodiment of the present invention. The lead-acid battery management system S includes a lead-acid battery system BS surrounded by a one-dot chain line in FIG. 1 and a management system MS including a management and support apparatus surrounded by a broken line.

Note that the lead-acid battery system BS and the management system MS that manages the lead-acid battery system BS are in a one-to-one relationship in FIG. 1, but there may be a plurality of the lead-acid battery systems BS managed by the management system MS.

First, the lead-acid battery system BS is a system that stores a grid current generated by various power plants such as a thermal power plant, or renewable energy such as wind power generation and transmitted in the lead-acid battery B, and transmits power stored in the lead-acid battery B to a load such as a home, an office, or a factory as necessary. The lead-acid battery system BS according to the embodiment of the present invention includes a BMU 1, an EMS 2, and a PCS 3 in addition to the lead-acid battery B.

The BMU 1 is a battery management unit, and is an apparatus that manages a voltage of each of cells constituting the lead-acid battery B, a temperature of the entire lead-acid battery B, and the like. Therefore, the BMU 1 can acquire operation history information via sensors that acquire various types of information provided in the lead-acid battery B to grasp a state of the lead-acid battery B.

Note that a function of the BMU 1 is not limited to the function described here, and may include other functions such as managing the balance of voltages in the respective cells, for example.

As the BMU 1, for example, a personal computer (PC) or a microcomputer is used. In addition, the BMU 1 may be installed near the lead-acid battery B, or may be configured to be managed on a cloud or managed remotely.

The EMS 2 is a so-called energy management system, and is a system that grasps, manages, and optimizes a use state of power energy. In addition, the PCS 3 is a power conditioning system, and serves a role of converting a direct current generated by the grid current or the like into an alternating current and adjusting the alternating current to a stable output suitable for output to the load or storage in the lead-acid battery B.

The lead-acid battery B is a secondary battery using lead as an electrode. Although the lead-acid battery B may have any structure, for example, a bipolar lead-acid battery is preferably applied. In the bipolar lead-acid battery, a positive electrode and a negative electrode are provided on both surfaces of a bipolar plate, and both active material layers of the positive electrode and the negative electrode are held in a state of being pressed from both sides by a current collector and a separator. Therefore, the active material layers are less likely to fall off as compared with a general lead-acid battery, and battery performance can be maintained and service life can be extended.

In addition, in the bipolar lead-acid battery, a material is reduced, a capacity per volume and a capacity per weight are improved, and a degree of freedom in designing the battery is improved as compared with a general lead-acid battery. Therefore, it is possible to significantly reduce cost and weight, and it is possible to further improve a battery capacity and rate characteristics.

Here, the number of the lead-acid batteries B to be installed, an installation method, and the like are not limited, and can be arbitrarily set. However, when the bipolar lead-acid battery is adopted, a larger number of bipolar lead-acid batteries can be installed as compared with a general lead-acid battery due to the above-described structural characteristics of the bipolar lead-acid battery.

Furthermore, the lead-acid battery B according to the embodiment of the present invention is provided with a transmission/reception apparatus and the like. This is for transmitting the operation history information acquired in the lead-acid battery B to the BMU 1.

The lead-acid battery B is provided with various sensors configured to acquire the operation history information (these various sensors are not indicated in FIG. 1). The various sensors are sensors that acquire information indicating an operation history or a state of the lead-acid battery B such as a current, a voltage, or a temperature. These sensors may be provided for each unit or for each individual lead-acid battery B.

In addition, these various sensors may be provided as a part of elements constituting the BMU 1. On the other hand, the BMU 1 may serve only a role of acquiring the operation history information from the various sensors without including the various sensors as constituent elements thereof as not illustrated in FIG. 1. In addition, the operation history information transmitted from the lead-acid battery B is recorded in a recording unit constituting the BMU 1 regardless of the inside or the outside although an internal configuration of the BMU 1 is not particularly described.

In the embodiment of the present invention, the direct current from the grid current from the power plant of thermal power or the like or renewable energy is converted into the alternating current in the PCS 3, and then, the output to the load or the storage in the lead-acid battery B is performed.

In the BMU 1, for example, a state of charge or the like of the lead-acid battery B is grasped, and an operation command is issued to the EMS 2 in accordance with the state of the lead-acid battery B. This operation command is further transmitted to the PCS 3 to appropriately issue a command for charging or discharging with respect to the lead-acid battery B and perform the above-described output to the load and the like.

Note that the BMU 1, the EMS 2, the PCS 3, and the lead-acid battery B are given as four constituent elements of the lead-acid battery system BS in the embodiment of the present invention as illustrated in FIG. 1, but the constituent elements of the lead-acid battery system BS are not limited thereto. In addition, it is also possible to impart the functions of the EMS 2 and the PCS 3 to the BMU 1, and in this case, the lead-acid battery system BS is constituted by the BMU 1 and the lead-acid battery B.

In addition, the respective constituent elements are connected by an arrow or a solid line in FIG. 1. Here, an arrow indicates a flow of information, and the information is transmitted in a direction of the arrow. On the other hand, a solid line indicates a flow of a current. Therefore, power transmitted from the grid current temporarily flows into the PCS 3 to be subjected to the above-described processing, and stored in the lead-acid battery B. Then, the power stored in the lead-acid battery B is discharged and transmitted to the load.

Furthermore, since the BMU 1 and the like are not necessarily installed near the lead-acid battery B and may be controllable on the cloud or remotely as described above, transmission and reception of information in the lead-acid battery management system S may be performed in a wired or wireless manner.

The management and support apparatus 4 is an apparatus that manages the lead-acid battery system BS. Specifically, the necessity of the replacement of the bipolar lead-acid battery constituting the lead-acid battery B is determined by calculating a deterioration degree or the like of the lead-acid battery B based on the operation history information of the lead-acid battery B transmitted from the BMU 1, or detecting occurrence of an abnormality or a failure of the lead-acid battery B or a sign of the occurrence.

Note that states of the lead-acid battery B, which are elements for determining the necessity of the replacement of the lead-acid battery B, such as the deterioration degree of the lead-acid battery B and the abnormality or failure of the lead-acid battery B, are hereinafter collectively referred to as an "unsoundness degree" as appropriate.

The management and support apparatus 4 is provided, for example, as an apparatus used by a person who exclusively manages the entire lead-acid battery management system S. Such an administrator supports each of the business operators to be described later using the management and support apparatus 4 in replacement of the lead-acid battery B determined to require replacement due to the unsoundness degree.

Note that the administrator may be the person who exclusively manages the entire lead-acid battery management system S in this manner, and further, the administrator may also be an operator of the lead-acid battery management system S. Alternatively, a manufacturer manufacturing the lead-acid battery B may manage the lead-acid battery management system S.

The management system MS includes apparatuses used by a separation and recovery business operator 5, a storage battery manufacturer 6, and a current collector manufacturing business operator 7 as persons who can access the management and support apparatus 4, that is, persons (so-called business operators involved in replacement and recycling) constituting a circulation cycle of recovery and reuse of the bipolar lead-acid battery determined to require replacement. Note that the management system MS includes apparatuses such as a PC used by the respective business operators as described above, but FIG. 1 illustrates names of the respective business operators.

In this manner, each of the apparatuses used in the separation and recovery business operator 5, the storage battery manufacturer 6, or the current collector manufacturing business operator 7 is connected to the management and support apparatus 4, and can share various types of information in the circulation cycle in which separation, recovery, and reuse of the current collector accompanying the replacement of the bipolar lead-acid battery are performed. Then, information transmitted and received between the management and support apparatus 4 and each of the business operators is centrally managed in the management and support apparatus 4.

Note that the information transmitted and received between the management and support apparatus 4 and each of the business operators is centrally managed in the management and support apparatus 4 in this manner, but each of the business operators can appropriately access the management and support apparatus 4 to acquire necessary information. In addition, authority for the access can be individually set.

Note that the embodiment of the present invention to be described hereinafter assumes that there are a business operator who exclusively manages the lead-acid battery management system S using the management and support apparatus 4 and the respective business operators (the separation and recovery business operator 5, the storage battery manufacturer 6, and the current collector manufacturing business operator 7) constituting the above-described circulation cycle.

In addition, description is given on the assumption that each of the business operators is one company in the embodiment of the present invention, but a plurality of companies may constitute a circulation cycle for each of the business operators. Furthermore, it is assumed that each of the business operators including the business operator that manages the lead-acid battery management system S using the management and support apparatus 4 exist individually, but for example, the separation and recovery business operator 5 may also serve as the current collector manufacturing business operator 7.

The separation and recovery business operator 5 is a business operator that receives a replaced bipolar lead-acid battery and separates and recovers a current collector used in the bipolar lead-acid battery, and is a so-called recycler.

Examples of the current collector recovered by the separation and recovery business operator 5 include current collectors in various forms, such as a current collector having a protrusion provided in a thickness direction of a metal foil in addition to the metal foil such as the above-described lead foil and a current collector formed in a mesh shape including an active material layer therein.

The storage battery manufacturer 6 is a manufacturer that manufactures, for example, a bipolar lead-acid battery used as the lead-acid battery B constituting the lead-acid battery system BS. On the other hand, the current collector manufacturing business operator 7 is a business operator that receives the current collector separated and recovered by the separation and recovery business operator 5 and newly manufactures a current collector based on the recovered current collector.

The current collector newly manufactured by the current collector manufacturing business operator 7 is delivered to, for example, the storage battery manufacturer 6, and used for manufacturing a new bipolar lead-acid battery or the like in the storage battery manufacturer 6. Alternatively, the current collector may be used for other purposes as long as being reused.

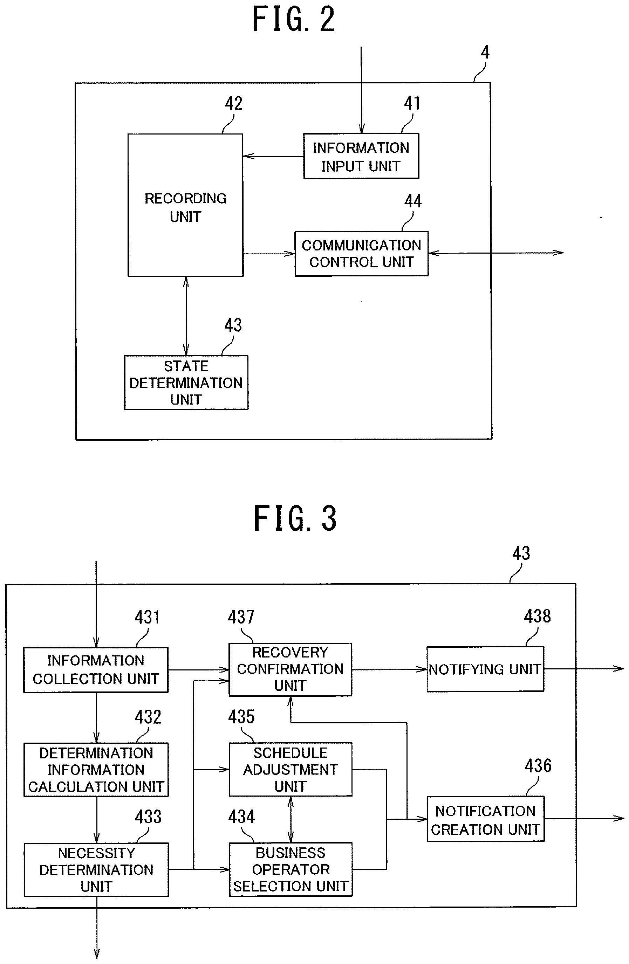

Next, the management and support apparatus 4 will be described in more detail. FIG. 2 is a block diagram illustrating an internal configuration of the management and support apparatus 4 according to the embodiment of the present invention. The management and support apparatus 4 includes an information input unit 41, a recording unit 42, a state determination unit 43, and a communication control unit 44.

The information input unit 41 receives, via the BMU 1, information regarding measurement values such as a current measured via the above-described various sensors provided in the lead-acid battery B. Note that the information input unit 41 may be set to continuously receive the input of the information described above, or may receive the input between two times arbitrarily set in advance. Alternatively, the information input unit 41 may be set to periodically receive the input.

The recording unit 42 is configured using, for example, a semiconductor or a magnetic disk. The recording unit 42 records the information regarding the measurement values from the various sensors of the lead-acid battery B received by the information input unit 41, information transmitted and received to and from the EMS 2, and the like. That is, the recording unit 42 receives and records all pieces of the operation history information of the lead-acid battery B including the information measured regarding the lead-acid battery B via the BMU 1 as described above.

Furthermore, the recording unit 42 may record various types of information which are transmission and reception targets when the BMU 1 communicates with the EMS 2. As illustrated in FIG. 1, the management and support apparatus 4 controls the lead-acid battery B via the EMS 2 and the PCS 3 based on the information regarding a state of the lead-acid battery B acquired by the BMU 1.

In addition, the recording unit 42 stores a program for calculating the deterioration degree used when the state determination unit 43 determines the necessity of the replacement of the lead-acid battery B, a management program of the lead-acid battery system BS, a lead-acid battery management program necessary for managing the entire lead-acid battery management system S, and the like. Furthermore, a list of the respective business operators constituting the circulation cycle is also recorded.

Note that the recording unit 42 is illustrated as one element constituting the management and support apparatus 4 in FIG. 2, but the recording unit 42 may be connected to the outside of the management and support apparatus 4, for example, instead of being provided inside the management and support apparatus 4. In addition, only the recording unit 42 may be provided on a cloud.

The state determination unit 43 grasps a state of the lead-acid battery B (bipolar lead-acid battery) and determines whether or not replacement is necessary. The determination is performed as needed during normal operation. In addition, for example, the determination may be performed when maintenance is performed on the lead-acid battery system BS. Note that a detailed internal configuration of the state determination unit 43 will be described later.

The communication control unit 44 is a means such as a LAN card or a modem, and is a means that enables the management and support apparatus 4 to be connected to a communication network such as the Internet or a LAN in a wireless or wired manner. In addition, it is possible to exchange various types of information regarding the circulation cycle to and from the BMU 1 and each of the business operators connected to the management system MS.

Note that, for example, a PC is used as the management and support apparatus 4 as described above. However, an information terminal such as a tablet or a smartphone may be used regardless of a stationary type or a portable type without being limited to the PC. Meanwhile, FIG. 2 illustrates only directly related functions in the embodiment of the present invention, and does not illustrate a drawing of each unit normally included in the PC or the like. Therefore, each unit not illustrated will be described hereinafter.

The management and support apparatus 4 has a configuration in which a central processing unit (CPU), a read only memory (ROM), a random access memory (RAM), and an input/output interface are connected via a bus. Furthermore, an input unit and a display unit used by the business operator that manages the lead-acid battery system BS are connected to the input/output interface, and the respective units illustrated in FIG. 2 described above are connected to the input/output interface.

The CPU reads and executes a boot program for activating the management and support apparatus 4 from the ROM based on an input signal from the input unit, and reads various operating systems stored in the recording unit 42. In addition, the CPU may control the lead-acid battery management system S or the like based on an input signal from another external device (not illustrated in FIG. 2) via the input unit or the input/output interface.

Furthermore, the CPU is a processing apparatus that reads a program and data stored in the RAM, the recording unit 42, or the like and loads the program and the data into the RAM, calculates the deterioration degree of the lead-acid battery B based on a command of the program read from the RAM, and implements a series of processes such as calculation and processing of data necessary for determining whether the lead-acid battery B is a replacement target.

The input unit is configured using an input device such as a keyboard or a touch panel to which various operations are input by the business operator managing the lead-acid battery management system S, and an input signal is generated based on the operation of the business operator and transmitted to the CPU via the bus.

The display unit is, for example, a liquid crystal display. The display unit receives an output signal from the CPU via the bus, and displays, for example, a determination result regarding the necessity of the replacement of the lead-acid battery B and a processing result of the CPU.

Note that, in a case where the management and support apparatus 4 itself is operated by remote control, for example, it is sufficient that the input unit and the display unit are not provided inside the management and support apparatus 4. In addition, the management and support apparatus 4 may have functions other than the above-described units.

In addition, the management and support apparatus 4 is an apparatus used by the business operator who exclusively manages and supports the lead-acid battery management system S, but information thereof may be stored in the recording unit 42 of the management and support apparatus 4 or may be placed on a cloud. In addition, the transmission and reception of information in the lead-acid battery management system S may be performed in a wired or wireless manner.

Next, the internal configuration of the state determination unit 43 will be described in more detail as follows. FIG. 3 is a block diagram illustrating a detailed internal configuration of the state determination unit 43 according to the embodiment of the present invention.

The state determination unit 43 determines a state of the lead-acid battery B by a process of updating the acquired operation history information, a process of estimating the deterioration degree of the capacity of the lead-acid battery B, or the like. Then, the necessity of replacement is determined based on the state of the lead-acid battery B, and issues a notification to the separation and recovery business operator 5 and the like when the replacement is necessary.

The state determination unit 43 includes an information collection unit 431, a determination information calculation unit 432, and a necessity determination unit 433. In addition, the state determination unit 43 includes a business operator selection unit 434 that selects a business operator to perform replacement or the like, a schedule adjustment unit 435, and a notification creation unit 436 which function if it is determined that the replacement of the lead-acid battery B. Furthermore, the state determination unit 43 includes a recovery confirmation unit 437 and a notifying unit 438 which function when the current collector is recovered.

The information collection unit 431 collects the operation history information of the lead-acid battery B received via the BMU 1 and the recording unit 42. Here, the operation history information is, for example, information of a current value or a voltage value during charging or discharging of the lead-acid battery B, or a temperature of the lead-acid battery B. That is, the operation history information is information on at least one of a current value, a voltage value, and a temperature measured by the sensors provided in the lead-acid battery B.

In addition, these may be collected as single piece of the operation history information, or a plurality of pieces of the operation history information among these may be associated with each other based on time, for example. Note that the operation history information may be information for each of a plurality of provided cells or information on the entire lead-acid battery B.

In addition, the operation history information handled by the information collection unit 431 includes not only measurement values measured by such various sensors or sampling values but also various types of information indicating the state of the lead-acid battery B calculated and processed using the measurement values measured by the sensors such as a state of charge.

That is, the information collection unit 431 calculates an integrated value in a certain period using, for example, current values. Alternatively, the information collection unit 431 calculates an average value, a maximum value, or a minimum value of voltage values or the like in a certain period.

In addition, a state of charge (SOC) may be calculated using the collected current value. Here, the state of charge is a value obtained by dividing the amount of electricity (a capacity) stored in the lead-acid battery B at that time, which is obtained by the information collection unit 431 calculating the capacity of the lead-acid battery B, by a capacity of the lead-acid battery B when being fully charged. Furthermore, the information collection unit 431 may calculate an internal resistance by dividing a voltage change amount ΔV in a certain period by a current change amount ΔI.

Various calculation values calculated by the information collection unit 431 are stored in the recording unit 42 individually or in association with each other, for example. Note that for example, a storage unit may be provided inside the state determination unit 43 and the calculation values may be stored in the storage unit although not illustrated in FIG. 3.

The information collection unit 431 collects, for example, maintenance information in addition to the operation history information. Here, examples of the maintenance information include information on presence or absence of the lead-acid battery B having an abnormal voltage based on a stable voltage as well as a capacity of the lead-acid battery B being charged.

Here, the capacity of the lead-acid battery B being charged is calculated based on, for example, information on measurement values indicating various states of the lead-acid battery B collected by the information collection unit 431. Specifically, for example, when a current flows through the lead-acid battery B, the information collection unit 431 calculates ΔQ by current integration, and calculates a value corresponding to a value of ΔQ as the amount of electricity. On the other hand, when no current flows through the lead-acid battery B, the amount of electricity is estimated from the stable voltage of the lead-acid battery B using a correlation between the state of charge and an open circuit voltage.

Alternatively, as a method for acquiring information regarding the capacity of the lead-acid battery B, for example, the information may be calculated by performing a charging process and a discharging process on the lead-acid battery B via the BMU 1.

That is, in order to more accurately measure the capacity of the lead-acid battery B, an actually measured capacity of the lead-acid battery B may be obtained based on the amount of electricity calculated in the discharge process performed after the charge process is performed instead of being obtained based on the amount of electricity in the charge process (hereinafter, the capacity calculated by the information collection unit 431 in this manner is appropriately referred to as "actually measured capacity").

The information collection unit 431 collects pieces of the operation history information in this manner and handles these pieces of operation history information as raw data or calculates information serving as various indexes indicating the states of the lead-acid battery B based on these pieces of information. Various pieces of information collected by the information collection unit 431 are transmitted to the determination information calculation unit 432.

The determination information calculation unit 432 calculates information (determination information) necessary to determine whether or not the lead-acid battery B is a replacement target based on the information transmitted from the information collection unit 431. Examples of the determination information include the unsoundness degree such as the deterioration degree (deterioration capacity) of the lead-acid battery B.

The operation history information and the information regarding the capacity of the lead-acid battery B are used in estimating the deterioration degree. Furthermore, accuracy can be improved, for example, when the deterioration degree of the lead-acid battery B is estimated by performing correction using various parameters such as a temperature difference with an ambient air temperature based on the operation history information of the lead-acid battery B.

Alternatively, in a case where there are variations in use states of a large number of the installed lead-acid batteries B, it is also possible to estimate the deterioration degree by collecting, for example, information regarding variations in deterioration of the respective cells constituting the lead-acid battery B from the operation history information and correcting an estimation result obtained with a component constituting an equivalent circuit of the lead-acid battery B based on the information. This technology is proposed in PTL 2 described above, for example.

In addition, for example, as described in PTL 3 described above, it is also possible to mention a method for determining a deterioration state of a lead-acid battery based on a measured value of a charging current in a measured constant voltage charging period of recovery charging of the lead-acid battery and correspondence relationship data using the correspondence relationship data indicating a correspondence relationship between a parameter related to a charging current and a parameter indicating a deterioration degree of a lead-acid battery.

The determination information calculation unit 432 can further calculate a dischargeable time or a dischargeable current of the lead-acid battery B based on the operation history information and the estimated deterioration capacity as the determination information. In addition, the determination information can also be obtained by calculating a response voltage from the internal resistance mentioned as one type of the operation history information.

Note that the deterioration degree (deterioration capacity) and the like as described above have been mentioned as an example of the information calculated as the determination information, but information other than these can be used as the determination information as long as the information can be calculated based on the operation history information and the like.

The necessity determination unit 433 determines whether or not the replacement of the lead-acid battery B of the lead-acid battery system BS is necessary based on the determination information calculated by the determination information calculation unit 432. When determining the necessity of replacement, the necessity determination unit 433 determines whether the determination information exceeds a threshold by comparison with the threshold determined in advance for each piece of the determination information to be used.

More specifically, for example, when detection of occurrence of an abnormality or a failure or a sign of the occurrence is taken as an example, the detection is performed as follows by the necessity determination unit 433 based on the operation history information. For example, in a case where a significant difference is recognized in comparison with a predetermined threshold regarding temperature information on the lead-acid battery B during operation, the necessity determination unit 433 determines that abnormality or failure has occurred in the lead-acid battery B. In addition, instead of the threshold, for example, the determination may be made in comparison with temperature information of another lead-acid battery B.

In addition, the necessity determination unit 433 determines that the abnormality or failure has occurred in the lead-acid battery B in a case where a significant difference is recognized in comparison with a predetermined threshold regarding voltage information of the lead-acid battery B after charging is stopped. In addition, it may be determined that the abnormality or failure has occurred in the lead-acid battery B in comparison with voltage information of another lead-acid battery B or in a case where a voltage value is originally close to zero. Furthermore, the necessity determination unit 433 can also make a determination by combining a plurality of pieces of the determination information.

Further, a threshold can be set, for example, with a margin of about one week to one month, that is, with some degree of extra time from an estimation of a capacity decrease expected from a usage amount with respect to a limit value at which a discharge power amount corresponding to a used SOC range set in the normal operation cannot be discharged. In this manner, the schedule adjustment unit 435 to be described later can perform adjustment with a high degree of freedom.

That is, this is because a storage capacity of the entire lead-acid battery system BS decreases if a predetermined period is required for replacement of the lead-acid battery B but the target lead-acid battery B becomes unusable before replacement processing is performed.

Specifically, for example, a discharge power amount before one month is calculated by inverse operation from the above-described limit value at which the discharge power amount cannot be discharged and the estimation of the capacity decrease, which are grasped for each of the lead-acid batteries B, and the necessity determination unit 433 determines that replacement processing for the lead-acid battery B is necessary when reaching the discharge power amount.

In addition, a period for discharging may be considered in a case where it is necessary to reduce the capacity of the lead-acid battery B, which is a replacement target, as much as possible before replacement.

Furthermore, when the necessity determination unit 433 makes a determination, it is also possible to make a determination in consideration of replacement work, procedure, and the like in addition to the determination information calculated by the determination information calculation unit 432, such as being near the lead-acid battery B which is a replacement target, that is, for example, forming the same unit, or work efficiency being better if replacement is performed at one time.

In a case where it is determined that replacement of the lead-acid battery B is unnecessary as a result of the determination by the necessity determination unit 433, the management of the lead-acid battery B is successively executed. On the other hand, in a case where it is determined that replacement of the lead-acid battery B is necessary as a result of the determination, the processing proceeds to the replacement processing.

Specifically, first, the necessity determination unit 433 identifies the lead-acid battery B that needs to be replaced and confirms a period during which the lead-acid battery B that needs to be replaced can be continuously used. Then, necessary information is transmitted to the business operator selection unit 434 and the schedule adjustment unit 435.

Here, examples of the necessary information transmitted from the necessity determination unit 433 to the business operator selection unit 434 and the like can include information regarding the target lead-acid battery B, such as an installation place and the number of lead-acid batteries that need to be replaced, and information on a grace period until replacement.
the business operator selection unit 434 first selects the separation and recovery business operator 5 in charge of replacement of the lead-acid battery B. Furthermore, the storage battery manufacturer 6 is also selected to deliver the lead-acid battery B necessary for installing the new lead-acid battery B after replacement.

When the business operator selection unit 434 selects a business operator, for example, a list of companies stored in the recording unit 42 is used as a basis. The list includes, for example, information such as a location and a contact address of each of the separation and recovery business operator 5 and the storage battery manufacturer 6. In addition, information regarding experience such as whether the lead-acid battery B has been replaced so far may be included.

Specifically, the business operator selection unit 434 selects an appropriate business operator based on the above-described list from various viewpoints such as being close to a place where the lead-acid battery B determined to need to be replaced is installed, being familiar with dealing with a manufacturer of the installed lead-acid battery B, being familiar with handling of an adhesive agent and a material used in the lead-acid battery B, and the storage battery manufacturer 6 that has manufactured the lead-acid battery B having been used so far.

In addition, for example, in a case of selecting the storage battery manufacturer 6 or the current collector manufacturing business operator 7, in addition to a geographical condition such as being close to the lead-acid battery B which is a replacement target in terms of distance described above, for example, a manufacturing capacity or a busy or idle status of the lead-acid battery B to be replaced, or a manufacturing capability such as whether or not having a technology capable of manufacturing a current collector having sufficient durability can be used as a selection condition.

In addition, the business operator selection unit 434 can also consider a combination of the separation and recovery business operator 5 and the storage battery manufacturer 6, and may also select a plurality of companies for each of the separation and recovery business operator 5 and the storage battery manufacturer 6 when a plurality of companies are registered in the list for each of the business operators. Note that conditions for selecting each of the business operators in the business operator selection unit 434 are appropriately set based on the respective viewpoints described above.

In a case of considering a circulation cycle such as installation, operation, recovery, and reuse of a lead-acid battery, a wide variety of human resources and business operators are involved in each of situations. On the other hand, a form of a lead-acid battery for power storage is operated for a long period of time, and thus, it is unclear whether business operators grasped and assumed at a time of installation or start of operation actually function effectively in the respective situations.

That is, in the case of the lead-acid battery B according to the embodiment of the present invention, in which the number of years from installation to replacement tends to be long, for example, there is a possibility that a list of business operators prepared at the time of installing the lead-acid battery B becomes useless as the years elapse since the storage battery manufacturer 6 that manufactured the lead-acid battery B, which is a replacement target, no longer exists or the like.

Therefore, the list of business operators may be periodically updated by the business operator selection unit 434. When updating the list of the business operators, for example, information regarding a business operator other than a business operator that handles a stationary lead-acid battery B, such as information on a business operator that handles an in-vehicle storage battery, may be used in addition to confirming the presence or absence of each of the business operators listed in the list.

The schedule adjustment unit 435 adjusts a replacement schedule based on the grace period expected until replacement of the lead-acid battery B received from the necessity determination unit 433. When the schedule adjustment unit 435 executes schedule adjustment, for example, necessary information such as information on the lead-acid battery B as the replacement target is sent to each of the business operators such as the separation and recovery business operator 5 using, for example, an e-mail, and the schedule adjustment is executed by inquiring about a workable schedule of each of the business operators.

In addition, for example, the adjustment may be achieved by causing each of the business operators selected by the business operator selection unit 434 to input a convenient schedule using a schedule adjustment application or the like provided on the Internet and causing the schedule adjustment unit 435 to aggregate the schedules that can be handled by each of the business operators.

Note that, when the schedule adjustment unit 435 performs the adjustment, information may be transmitted and received to and from the business operator selection unit 434 as appropriate. In addition, due to such exchange, the business operator selection unit 434 can also select a business operator that can execute the replacement processing in accordance with a schedule based on the information from the schedule adjustment unit 435.

When the business operator is selected and the replacement schedule is adjusted, these pieces of information are transmitted to the notification creation unit 436. The notification creation unit 436 issues a notification to the corresponding business operator based on the received information, and instructs the replacement of the lead-acid battery B by a due date.

The storage battery manufacturer 6 having received the notification from the management and support apparatus 4 replaces the target lead-acid battery B (bipolar lead-acid battery) based on an instruction of the notification, and sends the replaced lead-acid battery B to the separation and recovery business operator 5. On the other hand, the separation and recovery business operator 5 separates and recovers lead from the received replaced lead-acid battery B.

Furthermore, the separation and recovery business operator 5 or the storage battery manufacturer 6 confirms whether a total amount of the target lead-acid batteries B have been received based on the notified instruction, and reports a confirmation result to the management and support apparatus 4. The management and support apparatus 4 receives the report sent from the separation and recovery business operator 5 or the like, and the recovery confirmation unit 437 confirms the report.

The recovery confirmation unit 437 confirms a content of the report based on the information regarding the lead-acid batteries B as the replacement targets transmitted from the necessity determination unit 433 and the information regarding the business operators and the schedule for execution of the replacement transmitted from the notification creation unit 436.

This is because it is not possible to ensure the circulation cycle of lead without illegal disposal or the like unless it is confirmed whether the replacement of the lead-acid batteries B has been performed to recover the total amount thereof as instructed. In addition, the confirmation allows a measure to be immediately taken even in a case where the measure as instructed has not been taken, such as when a business operator different from the selected business operator has executed the replacement processing.

When the recovery confirmation unit 437 completes the confirmation, a confirmation result is transmitted to the notifying unit 438. The notifying unit 438 notifies the business operator who manages the lead-acid battery management system S based on the confirmation result. By the notification, the business operator can take a countermeasure as necessary.

Note that, as described above, the respective business operators can share schedule information with each other via the notification sent from the notification creation unit 436 to the respective business operators. Here, examples of the schedule information include the following information.

An example is the storage battery manufacturer 6, for example, a schedule on which the storage battery manufacturer 6 can prepare a required number of lead-acid batteries B for replacement, take the lead-acid batteries B to a place where the lead-acid batteries B as replacement targets are installed, and replace the lead-acid batteries B. In addition, when the storage battery manufacturer 6 performs replacement work and removal work of the lead-acid batteries B as the replacement targets on different days, a schedule on which the lead-acid batteries B can be removed from the installation place can also be included.

Furthermore, as the schedule information, a schedule on which the lead-acid batteries B arrive at the separation and recovery business operator 5 when the lead-acid batteries B replaced and removed by the storage battery manufacturer 6 are delivered to the separation and recovery business operator 5 (for example, information such as whether the replaced lead-acid batteries B arrive collectively or separately, or information on a quantity thereof may be included), a schedule for separation and recovery of the lead-acid batteries B received by the separation and recovery business operator 5 are also conceivable.

On the other hand, for example, assuming that the separation and recovery business operator 5 replaces the target lead-acid batteries B, included are a schedule on which the separation and recovery business operator 5 receives the lead-acid batteries B for replacement from the storage battery manufacturer 6 and performs replacement and removal, and a schedule on which the replacement and removal are completed in a case where the replacement and removal are performed over a plurality of days. In addition, a schedule convenient for delivering the lead-acid batteries B to the separation and recovery business operator 5 and a schedule convenient for removal, and the like which are determined from the convenience of the storage battery manufacturer 6, are also included as the schedule information.

Note that information shared among the management and support apparatus 4, the separation and recovery business operator 5, the storage battery manufacturer 6, and the current collector manufacturing business operator 7 is not limited to the schedule information described above. For example, the notification to the separation and recovery business operator 5 may include information on a business operator corresponding to each work regarding work of replacement and removal of the lead-acid battery B and the like, such as contact with the current collector manufacturing business operator 7 that is optimal for recycle production as a part of the circulation cycle of the current collector of the lead from the updated business operator list described above. Then, a plurality of business operator candidates may be included as the information on the business operator as described above.

Further, the notification transmitted from the notification creation unit 436 to the selected separation and recovery business operator 5 includes, for example, an instruction concerning occurrence and reception of the replaced bipolar lead-acid battery. On the other hand, with respect to the selected storage battery manufacturer 6, for example, an instruction to prepare and supply a bipolar lead-acid battery that is a target of the circulation cycle is described for the storage battery manufacturer 6. In addition, the notification issued from the notification creation unit 436 to the selected current collector manufacturing business operator 7 may include, for example, instructions for separation from the replaced bipolar lead-acid battery, generation of recovered lead, and manufacture of a new current collector of a bipolar lead-acid battery.

Furthermore, information is shared between the management and support apparatus 4 and each of the business operators by bidirectional exchange of information. For example, information on the degree of accumulation of lead recovered by the separation and recovery business operator 5, and information on a determination of implementation of sending of lead to the current collector manufacturing business operator 7 based on a business state, and a schedule and an amount in a case of the implementation are shared from the separation and recovery business operator 5 to the management and support apparatus 4.

Then, the information on the determination of the implementation of the lead transmission to the current collector manufacturing business operator 7 and the schedule and the amount in the case of the implementation may be notified from the management and support apparatus 4 that has acquired the information to the current collector manufacturing business operator 7, or may be notified from the separation and recovery business operator 5 to the management and support apparatus 4 and to the current collector manufacturing business operator 7 at the same time. In this manner, each piece of the information is shared between the management and support apparatus 4 and each of the business operators constituting the circulation cycle.

The information regarding the circulation cycle may be shared between the management and support apparatus 4 and each of the business operators in this manner, and may be centrally managed in the management and support apparatus 4. Here, examples of the information regarding the circulation cycle are given as follows including one described above.

That is, there is information on the lead-acid battery system BS, for example, information on a manufacturer and a manufacture lot of the configured lead-acid battery B, a solid ID number, an operation period until replacement, and the like. In addition, examples of the information in a case where replacement work is performed can include the number of lead-acid batteries B to be replaced, information on a solid ID number of the target lead-acid battery B, information regarding the storage battery manufacturer 6 that has performed the replacement, the separation and recovery business operator 5 that has separated and recovered lead, information on the amount of the separated and recovered lead, information on the current collector manufacturing business operator 7 that has received the recovered lead, information on the amount of the received lead, information on the date and time when each processing has been executed, and the like.

Note that the functions of the respective units constituting the state determination unit 43 described above are realized by causing the management and support apparatus 4 of the lead-acid battery management system S to execute programs stored in the recording unit 42 or the like, for example, a program for calculating the deterioration degree, a management program of the lead-acid battery system BS, and a lead-acid battery management program necessary for managing the entire lead-acid battery management system S.

### [Operation]

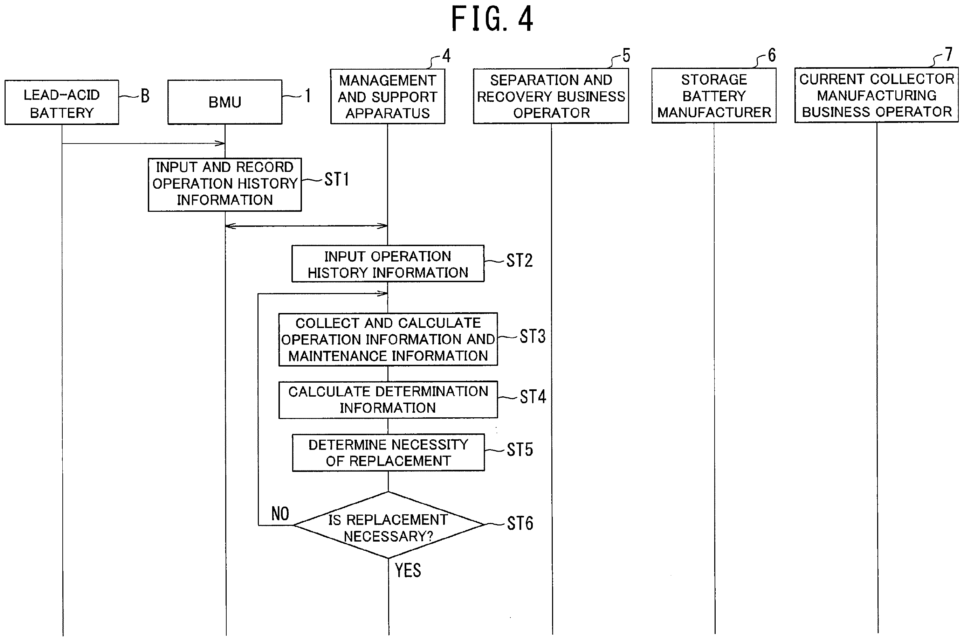

Next, a flow of replacement of the lead-acid battery B will be described below with reference to FIGS. 4 to 6. FIGS. 4 to 6 are sequence diagrams illustrating a flow for achieving the circulation cycle of the bipolar lead-acid battery according to the embodiment of the present invention.

In the sequence diagram of each of the drawings, six "lead-acid battery B", "BMU 1", "management and support apparatus 4", "separation and recovery business operator 5", "storage battery manufacturer 6", and "current collector manufacturing business operator 7" are illustrated from the left at the top. Then, the processing proceeds from top to bottom.

Note that information is shared between the management and support apparatus 4 and each of the business operators as described above, and pieces of the information are centrally managed in the management and support apparatus 4. Therefore, the information is transmitted and received between the management and support apparatus 4 and each of the business operators every time exchange (sharing) of the information is achieved, but it is complicated to illustrate all pieces of the information in the sequence diagrams. Therefore, only exchange of information necessary for a flow of operations to be described below is illustrated in FIGS. 4 to 6, and description of exchange of other information is omitted.

First, from the lead-acid battery B, operation history information is transmitted to and recorded in the BMU 1 (ST1). Note that a transmission timing of the operation history information from the lead-acid battery B to the BMU 1 can be arbitrarily set as described above.

The operation history information transmitted to the BMU 1 is appropriately input to the management and support apparatus 4 via the information input unit 41 (ST2). Similarly, a timing and a method for the management and support apparatus 4 to acquire the operation history information can be arbitrarily set.

In the management and support apparatus 4, the information collection unit 431 of the state determination unit 43 collects and calculates the operation history information and maintenance information, and also calculates the actually measured capacity as described above (ST3). In addition, using the information collected by the information collection unit 431, the determination information calculation unit 432 calculates determination information necessary for determining the necessity of replacement of the lead-acid battery B (ST4).

Then, the necessity determination unit 433 determines whether or not it is necessary to replace the lead-acid battery B using the determination information calculated by the determination information calculation unit 432 (ST5). As a result, in a case where it is determined that the replacement of the lead-acid battery B as a target is not necessary, that is, the operation can be successively continued (NO in ST6), the processing returns to step ST3, and collection and calculation of information such as operation history information and calculation of determination information are executed again.

On the other hand, in a case where it is determined that the target lead-acid battery B needs to be replaced in the determination by the necessity determination unit 433 (YES in ST6), information necessary for the replacement is transmitted to the business operator selection unit 434 and the schedule adjustment unit 435.

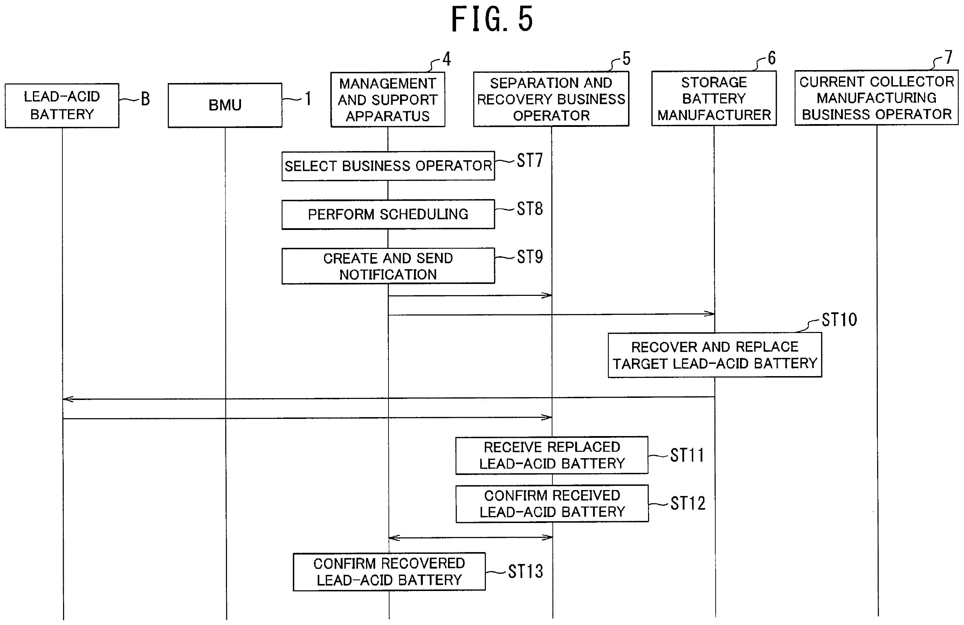

The business operator selection unit 434 refers to a list of business operators stored in the recording unit 42, for example, and selects a business operator suitable for performing the replacement (ST7 in FIG. 5). In addition, the schedule adjustment unit 435 adjusts a schedule for the replacement (ST8). Then, when the selection of the business operator and the adjustment of the schedule are completed, information regarding the business operator and the like are transmitted to the notification creation unit 436. The notification creation unit 436 creates and sends a notification to the selected business operator (ST9).

In the sequence diagram of FIG. 5, two arrows from the management and support apparatus 4 to the right are illustrated below step ST9. The first arrow is directed to the separation and recovery business operator 5, and the second arrow is directed to the storage battery manufacturer 6.

That is, the notification creation unit 436 gives, for example, information on occurrence of the lead-acid battery B that needs to be replaced and an instruction for separation and recovery of a current collector from the replaced lead-acid battery B to the separation and recovery business operator 5. In addition, a notification to the storage battery manufacturer 6 includes, for example, an instruction to replace the target lead-acid battery B and send the lead-acid battery B to the separation and recovery business operator 5, and install a new lead-acid battery B.

Therefore, the storage battery manufacturer 6 collects the target lead-acid battery B on a site, replaces the lead-acid battery B with the new lead-acid battery, and sends the lead-acid battery B to the separation and recovery business operator 5 (ST10). Then, the separation and recovery business operator 5 receives the replaced lead-acid battery B that has been replaced from the storage battery manufacturer 6 (ST11), and first confirms the received lead-acid battery B (ST12).

The separation and recovery business operator 5 confirms the received lead-acid battery B in order to reliably separate and recover the current collector from the lead-acid battery B, which is the replacement target, and reuse the current collector as described above. Therefore, the separation and recovery business operator 5 sends the confirmed content to the management and support apparatus 4, and the management and support apparatus 4 confirms whether the target lead-acid battery B has been correctly replaced in the recovery confirmation unit 437 (ST13).

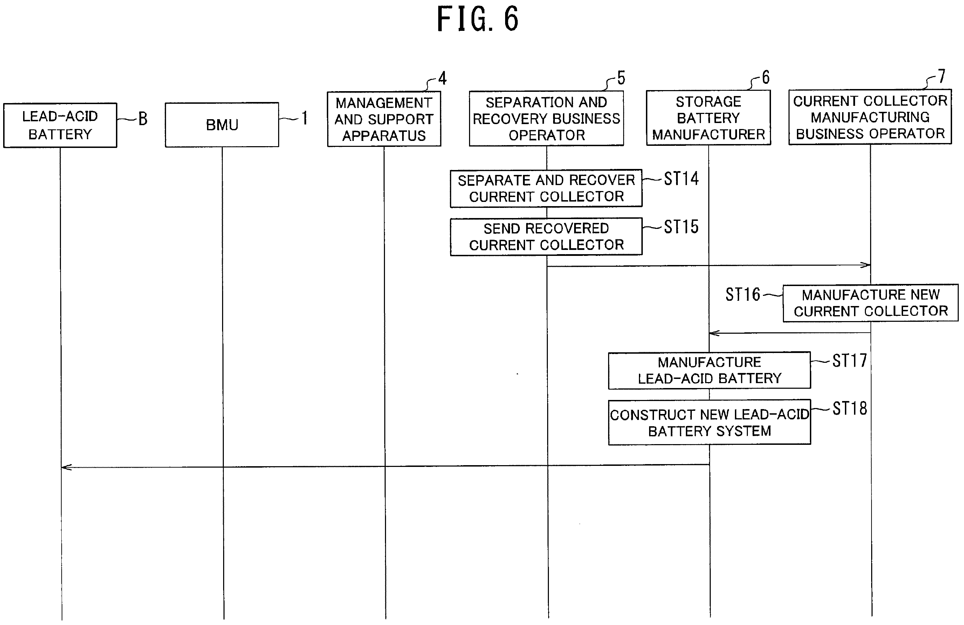

The separation and recovery business operator 5 separates and recovers the current collector from the lead-acid battery B received from the storage battery manufacturer 6 (ST14 in FIG. 6).

Note that, here, although the roles of the separation and recovery business operator 5 and the storage battery manufacturer 6 are described as described above, for example, the separation and recovery business operator 5 may receive a new lead-acid battery B to be replaced from the storage battery manufacturer 6, go to a site and replace the lead-acid battery B by itself, install the new lead-acid battery B, and then, take out the replaced lead-acid battery B to separate and collect a current collector.

The separation and recovery business operator 5 sends the recovered current collector to the current collector manufacturing business operator 7 (ST15). The current collector manufacturing business operator 7 reuses the received current collector to manufacture a new current collector (ST16), and delivers the new current collector to the storage battery manufacturer 6.

Then, the storage battery manufacturer 6 manufactures the lead-acid battery B based on the new current collector that has been reused (ST17), and constructs a new lead-acid battery system BS (ST18).

Through the steps described above, it is possible to provide a lead-acid battery management system and a lead-acid battery management program which appropriately manage a bipolar lead-acid battery to reduce a degree to which the lead-acid battery imposes a load on environment as much as possible and are necessary to cause a circulation cycle from manufacturing to reuse to reliably function.

Note that the separation and recovery business operator 5, the storage battery manufacturer 6, and the current collector manufacturing business operator 7 have appeared in the above-described flow of replacement of the lead-acid battery B. However, for example, a person who transports the replaced lead-acid battery B and the like among the above respective business operators, and other persons of the above business operators can also participate in this circulation cycle.

In addition, for the lead-acid battery B determined to require replacement by the necessity determination unit 433, for example, the necessity determination unit 433 may issue an instruction to the BMU 1 to perform control so as to perform only discharging without performing charging. That is, the lead-acid battery B as a replacement target is controlled such that its capacity is as low as possible at a time of replacement, whereby the charged power can be effectively utilized.

Note that the technology described in the embodiment of the present invention can also adopt the following configurations.
(1) A lead-acid battery management system including:
   a lead-acid battery system including a bipolar lead-acid battery; and
   a management and support apparatus configured to manage the lead-acid battery system,
   in which the management and support apparatus includes:
      a recording unit configured to record operation history information of the bipolar lead-acid battery; and
      a state determination unit configured to determine necessity of replacement of the bipolar lead-acid battery.
(2) The lead-acid battery management system according to (1), in which
   the state determination unit includes:
   an information collection unit configured to collect the operation history information of the bipolar lead-acid battery;
   a determination information calculation unit configured to calculate determination information for determining the necessity of the replacement of the bipolar lead-acid battery using the operation history information collected by the information collection unit; and
   a necessity determination unit configured to determine the necessity of the replacement of the bipolar lead-acid battery based on the determination information.
(3) The lead-acid battery management system according to (2), in which the determination information calculation unit calculates, as the determination information, information indicating an unsoundness degree of the bipolar lead-acid battery.
(4) The lead-acid battery management system according to (2) or (3), in which the necessity determination unit compares the determination information with a preset threshold and determines that replacement of the bipolar lead-acid battery is necessary when the determination information exceeds the threshold.
(5) The lead-acid battery management system according to any one of (2) to (4), in which
   the state determination unit further includes:
   a business operator selection unit configured to select a business operator involved in a circulation cycle of the bipolar lead-acid battery when the necessity determination unit determines that the replacement of the bipolar lead-acid battery is necessary;
   a schedule adjustment unit configured to adjust a schedule of the circulation cycle of the bipolar lead-acid battery; and
   a notification creation unit configured to create a notification for notifying the selected business operator of the schedule.
(6) The lead-acid battery management system according to (5), in which
   the business operator selected by the business operator selection unit is a storage battery manufacturer, and
   when the storage battery manufacturer is selected, the notification created by the notification creation unit includes an instruction for the storage battery manufacturer to prepare and supply the bipolar lead-acid battery that is a target of the circulation cycle.
(7) The lead-acid battery management system according to (5), in which
   the business operator selected by the business operator selection unit is a separation and recovery business operator, and
   when the separation and recovery business operator is selected, the notification created by the notification creation unit includes an instruction, for the separation and recovery business operator, concerning occurrence and reception of the bipolar lead-acid battery that has been replaced.
(8) The lead-acid battery management system according to (5), in which
   the business operator selected by the business operator selection unit is a current collector manufacturing business operator, and
   when the current collector manufacturing business operator is selected, the notification created by the notification creation unit includes an instruction, for the current collector manufacturing business operator, concerning generation of lead separated and recovered from the replaced bipolar lead-acid battery and manufacture of a current collector of a new bipolar lead-acid battery.
(9) The lead-acid battery management system according to any one of (5) to (8), in which the notification created by the notification creation unit includes an instruction, for business operators involved in the circulation cycle of the bipolar lead-acid battery, to share information between each of the business operators and the management and support apparatus.
(10) The lead-acid battery management system according to any one of (5) to (9), in which the recording unit stores a list for selecting the business operator to be used by the business operator selection unit when it is determined that the replacement of the bipolar lead-acid battery is necessary.
(11) A bipolar lead-acid battery management program causing a lead-acid battery management system to execute processing including:
   collecting operation history information of a bipolar lead-acid battery;
   calculating determination information for determining necessity of replacement of the bipolar lead-acid battery using the collected operation history information; and
   determining the necessity of the replacement of the bipolar lead-acid battery based on the determination information.
(12) The bipolar lead-acid battery management program according to (11) causing the lead-acid battery management system to execute the processing further including:
   selecting a business operator involved in a circulation cycle of the bipolar lead-acid battery when the replacement of the bipolar lead-acid battery is necessary; and
   creating a notification and notifying the business operator of the notification.

### Reference Signs List

- 1: BMU
- 2: EMS
- 3: PCS
- 4: Management and support apparatus
- 5: Separation and recovery business operator
- 6: Storage battery manufacturer
- 7: Current collector manufacturing business operator
- 41: Information input unit
- 42: Recording unit
- 43: State determination unit
- 431: Information collection unit
- 432: Determination information calculation unit
- 433: Necessity determination unit
- 434: Business operator selection unit
- 435: Schedule adjustment unit
- 436: Notification creation unit
- 437: Recovery confirmation unit
- 438: Notifying unit
- S: LEAD-ACID BATTERY MANAGEMENT SYSTEM
- BS: Lead-acid battery system
- MS: Management system

## Claims

1. A lead-acid battery management system comprising:
a lead-acid battery system including a bipolar lead-acid battery; and
a management and support apparatus configured to manage the lead-acid battery system,
wherein the management and support apparatus includes:
a recording unit configured to record operation history information of the bipolar lead-acid battery; and
a state determination unit configured to determine necessity of replacement of the bipolar lead-acid battery.

2. The lead-acid battery management system according to claim 1, wherein
the state determination unit includes:
an information collection unit configured to collect the operation history information of the bipolar lead-acid battery;
a determination information calculation unit configured to calculate determination information for determining the necessity of the replacement of the bipolar lead-acid battery using the operation history information collected by the information collection unit; and
a necessity determination unit configured to determine the necessity of the replacement of the bipolar lead-acid battery based on the determination information.

3. The lead-acid battery management system according to claim 2, wherein the determination information calculation unit calculates, as the determination information, information indicating an unsoundness degree of the bipolar lead-acid battery.

4. The lead-acid battery management system according to claim 2, wherein the necessity determination unit compares the determination information with a preset threshold and determines that replacement of the bipolar lead-acid battery is necessary when the determination information exceeds the threshold.

5. The lead-acid battery management system according to claim 3, wherein the necessity determination unit compares the determination information with a preset threshold and determines that replacement of the bipolar lead-acid battery is necessary when the determination information exceeds the threshold.

6. The lead-acid battery management system according to any one of claims 2 to 5, wherein
the state determination unit further includes:
a business operator selection unit configured to select a business operator involved in a circulation cycle of the bipolar lead-acid battery when the necessity determination unit determines that the replacement of the bipolar lead-acid battery is necessary;
a schedule adjustment unit configured to adjust a schedule of the circulation cycle of the bipolar lead-acid battery; and
a notification creation unit configured to create a notification for notifying the selected business operator of the schedule.

7. The lead-acid battery management system according to claim 6, wherein
the business operator selected by the business operator selection unit is a storage battery manufacturer, and
when the storage battery manufacturer is selected, the notification created by the notification creation unit includes an instruction for the storage battery manufacturer to prepare and supply the bipolar lead-acid battery that is a target of the circulation cycle.

8. The lead-acid battery management system according to claim 6, wherein
the business operator selected by the business operator selection unit is a separation and recovery business operator, and
when the separation and recovery business operator is selected, the notification created by the notification creation unit includes an instruction, for the separation and recovery business operator, concerning occurrence and reception of the bipolar lead-acid battery that has been replaced.

9. The lead-acid battery management system according to claim 6, wherein
the business operator selected by the business operator selection unit is a current collector manufacturing business operator, and
when the current collector manufacturing business operator is selected, the notification created by the notification creation unit includes an instruction, for the current collector manufacturing business operator, concerning generation of lead separated and recovered from the replaced bipolar lead-acid battery and manufacture of a current collector of a new bipolar lead-acid battery.

10. The lead-acid battery management system according to claim 6, wherein the notification created by the notification creation unit includes an instruction, for business operators involved in the circulation cycle of the bipolar lead-acid battery, to share information between each of the business operators and the management and support apparatus.

11. The lead-acid battery management system according to claim 6, wherein the recording unit stores a list for selecting the business operator to be used by the business operator selection unit when it is determined that the replacement of the bipolar lead-acid battery is necessary.

12. A bipolar lead-acid battery management program causing a lead-acid battery management system to execute processing including:
collecting operation history information of a bipolar lead-acid battery;
calculating determination information for determining necessity of replacement of the bipolar lead-acid battery using the collected operation history information; and
determining the necessity of the replacement of the bipolar lead-acid battery based on the determination information.

13. The bipolar lead-acid battery management program according to claim 12 causing the lead-acid battery management system to execute the processing further including:
selecting a business operator involved in a circulation cycle of the bipolar lead-acid battery when the replacement of the bipolar lead-acid battery is necessary; and
creating a notification and notifying the business operator of the notification.
